# EUROPEAN PATENT SPECIFICATION

(11) **EP 0 329 469 B1**
(45) Date of publication and mention of the grant of the patent: **19.05.1993**
(21) Application number: 89301571.9
(22) Date of filing: 17.02.1989
(51) Int. Cl.: C04B 35/00, C04B 35/10

(54) **Ceramic/distillable binder compositions**
Zusammensetzung aus keramischem Material und destillierbarem Bindemittel
Composition à base d'un matériau céramique et d'un liant distillable

(30) Priority: 18.02.1988 US 157024
(43) Date of publication of application: 23.08.1989
(73) Proprietor: E.I. DU PONT DE NEMOURS AND COMPANY, Wilmington Delaware 19898 (US)
(72) Inventor: Howard, Edward George, Jr., Hockessin Delaware 19707 (US); Tietz, Raymond Frank, Wilmington Delaware 19810 (US)
(74) Representative: Jones, Alan John

(56) References cited:
- EP-A- 0 016 307
- EP-A- 0 114 746
- EP-A- 0 292 125
- US-A- 4 810 463

## Description

### BACKGROUND OF THE INVENTION

This invention relates to ceramic compositions containing a distillable binder, shaped articles formed therefrom and preparative processes for the shaped articles and for the compositions.

Shapeable ceramic or preceramic compositions containing polymeric binders wherein the polymer provides a matrix for the composition are well known. Examples of such polymeric binders are epoxy resins, phenolic resins, polyimides, polysulfones, polystyrenes, polyaramids, polyesters and polycarbonates; see, for example, Lee et al., "Metal and Polymer Matrix Composites", Noyes Data Corp., 1987, pages 10 to 18 and 121 to 123. Polymers provide plastic properties which impart toughness and shapeability to ceramic components. However, the polymers must be destructively burned off during densification/firing of the ceramic composite. Frequently, undesirable carbonization occurs during removal of the polymer binder by the technique of burning it off.

This EP-A-0 114 746 discloses a ceramic composition suitable for injection moulding comprising a ceramic powder and a binding agent. The binding agent is a defined polyacetal which upon heating volatilises as a clean burning fuel not leaving any residue and results in a sintered ceramic article without any latent defects or weak spots.

So far as can be determined, the art until this time has been unaware of a process for forming ceramic articles from a ceramic/binder composition without the necessity for destructive removal of the binder with the dangers attendant thereon of contaminating the ceramic with undesired polymer residues. It is the subject of this invention to provide compositions of ceramic particulates and methods for making and working the compositions so that it will now be possible to make ceramic articles without the necessity and cost of destroying the polymeric binder matrix used to hold the ceramic particles together until the sintering step.

According to this invention a ceramic-containing composition comprises particulates of one or more ceramic materials, precursors of one or more ceramic materials, or mixtures thereof, and at least 10% by weight of a distillable binder. The distillable binder
(a) is a nonpolymeric organic compound, or a mixture of such compounds, having plastic crystalline properties and at least one melting point in a temperature range of about -40°C to about 300°C; and
(b) undergoes distillation or sublimation and is recovered chemically unchanged under ceramic composition densification conditions; said composition capable of being formed into a shaped article.

The ceramic shaped article can be made and densified by a process comprising:
(i) admixing particulates of one or more ceramic materials, precursors of one or more ceramic materials, or mixture thereof, and at least 10 weight percent of a distillable binder thereof, wherein said distillable binder:
   (a) is a nonpolymeric organic compound or mixture of such compounds having plastic crystalline properties and at least one melting point in the temperature range of from about -40°C to about 300°C; and
   (b) undergoes distillation or sublimation and is recoverable chemically unchanged during ceramic composition densification conditions;
(ii) forming said admixture into the desired shape;
(iii) removing said distillable binder by distillation, sublimation, or evaporation, and sintering the admixed ceramic materials; and
(iv) recovering said distillable binder chemically unchanged.

This invention is based on the discovery that certain materials heretofore unknown to be useful for this purpose can be employed as distillable binders for ceramic particles. These materials can be non-destructively distilled or sublimed from the shaped composite without formation of carbon or other by-products, and are available for reuse. Suitable distillable binders include crystalline organic compounds known as "plastic crystals" or "disordered crystal mesophases", usually having cubic symmetry and two melting points between which "plastic" properties are exhibited. When the plastic properties occur within a practical temperature range such crystals can serve as matrices for ceramic materials.

The term "ceramic" as employed in the description of this invention specifically includes superconducting oxides in the broadest sense. The term also includes high melting metals and ceramic precursors which are converted into ceramics at elevated temperature. By "distillable binder" is meant one that can be removed from the composition by distillation, sublimation, evaporation, and the like, and recovered chemically unchanged. Distillable binders include, but are not limited to, plastic crystalline materials (plastic crystals). By "plastic" is meant the capability of being formed into a film, either free-standing or supported, or any other shape.

The most preferred binder of this invention is the plastic crystal, succinonitrile. Such plastic crystals and their properties are described in Sherwood (Ed.), "The Plastically Crystalline State", Wiley, 1979, especially Chaps 1 and 8; Gray et al., (Eds.), "Liquid Crystals and Plastic Crystals", Horwood/Wiley, 1974, pages 48 to 59; Aston in Fox et al. (Eds.), "Physics and Chemistry of the Organic Solid State", Interscience, 1963, pages 543 to 583. There is no suggestion in this art or any other so far as can be determined that plastic crystals can be employed as binders or matrices for ceramic compositions. Another preferred binder is 1,3,5-trioxane (trioxane), a crystalline trimer of formaldehyde having a single melting point.

The ceramic component of the compositions of this invention may be broadly selected from oxides, nitrides, carbides or silicides, or from metals such as iron. Preferred are aluminum oxide, aluminum nitride, or a mixture of aluminum nitride and boron nitride. Representative of the ceramics that can be employed to make the compositions of this invention are those discussed in Kirk-Othmer, "Encyclopedia of Chemical Technology", 3rd Edition, Vol. 5, "Ceramics", pages 234 to 314, 1979. See, especially, the Tables on pages 251, 252, 312 and 313.

Especially preferred ceramic materials for use in preparing the ceramic/distillable binder compositions of the present invention are mixed metal oxide phases which are superconducting. The development of superconducting oxide materials is described by Clarke in Advanced Ceramic Materials, 2(3B), 273 (1987). Examples of superconducting oxides that can be employed to make the compositions of this invention include La₁₋ₓ(Ba, Sr, Ca)ₓCuO_{4-y} wherein x is typically about 0.15 and y indicates oxygen vacancies (Bednorz et al. Europhys. Lett. 3, 379 to 384, (1987), or the so-called "1-2-3" superconducting phases having the formula MBa₂Cu₃Oₓ wherein M is selected from Y, Nd, Sm, Eu, Gd, Dy, Ho, Er, Tm, Yb, La and Lu, and x is from about 6.5 to 7.0 (Chu et al. Science 235, 567 (1987). See also Cava et al. Phys. Rev. Lett. 58, 1676 (1987).

Also useful are powdered precursors of superconducting oxides. A suitable precursor can be prepared by mixing barium oxide and yttrium oxide with an aqueous solution of cupric nitrate or acetate at a temperature of about 50° to 100°C to obtain a suspension of yttrium:barium:copper in an atomic ratio of about 1:2:3, and drying the suspension to obtain the powdered precursor. Also useful are superconductors having the formula Bi₂Sr_{3-z}Ca_{z}Cu₂O_{8+w} wherein z is about 0.1 to 0.9, preferably 0.4 to 0.8, and w is greater than 0 but less than about 1. Pure phase superconductive ceramics as well as ceramics containing no superconductive phase or mixed ceramic/superconductive phases, of any crystal structure and morphology, can be employed in the compositions and processes of this invention.

### DETAILS OF THE INVENTION

Following are several typical embodiments of the compositions of this invention.
A. A composition comprising one or more ceramic particulates and/or particulate precursors thereof, and at least about 10 weight percent, preferably at least about 20 weight percent, of a distillable binder having plastic properties in a temperature range of about -40°C to 300°C, preferably about 15° to 200°C.
B. A composition as in Embodiment A wherein the distillate binder is a plastic crystalline compound (plastic crystal).
C. A composition as in Embodiment B wherein the plastic crystalline compound is succinonitrile or trioxane.
D. A composition as in C wherein the ceramic compound comprises a superconducting phase such as "1-2-3" type.
E. A composition as in C wherein the ceramic compound comprises one or both of aluminum oxide or nitride.
F. A composition of any one or more of Embodiments A to E in the form of a shaped article.
G. A composition as in F wherein the article is in the shape of a film or fiber.

The following represent several typical embodiments of methods for forming the compositions of this invention.
H. A process for preparing a composition as in Embodiment A through E comprises admixing a distillable binder and ceramic powder, optionally in the presence of a solvent for the binder.
I. A process as described in H conducted at a temperature within, or above, the plastic range of said binder followed by removing any solvent that may be present.
J. A process for densifying a composition as described in any of Embodiments A through G comprising distilling the binder from the composition and sintering the ceramic component, the process being characterized in that the distillation step does not destroy the binder or leave binder residue in the component during densification.
K. A process as in J comprising the additional step of recovering the binder.

The ceramic materials should be in particulate form, preferably fine powder containing largely submicron particles. The distillable binder for use in the invention is any compound or mixture of compounds which have at least one melting point and exhibit plastic properties in a given temperature range. Many but not all of the distillable binders contemplated for use in this invention have dual melting points with the plastic range usually occuring between the two melting points. Trioxane, however, is one instance of a preferred distillable binder that has but a single melting point.

It is convenient, but not essential, to dissolve the binder in a comparatively volatile solvent which is chemically inert in the mixing and solvent removal steps. When the binder is succinonitrile or trioxane, then methylene chloride, or more preferably, mixtures of methylene chloride and methanol, are suitable solvents. It is desirable that the solvent be capable of wetting the ceramic component. It may also be desirable to add other materials, such as acetic acid, which aid dispersion of the particulate ceramic material and/or prevent caking or agglomeration of the particulate ceramic.

Uniform mixing in the presence of solvent can be conveniently accomplished on a small scale in a Waring or food blendor, although other mixing methods can be employed which will be known to those of ordinary skill in the ceramic art. After mixing, solvent(s) should be removed by evaporation under gentle heat. Alternatively, the components can be blended without added solvent at a temperature at which the binder is in liquid form. The binder can be supported on an inert support such as an oxide, and dry-mixed in particulate form with the ceramic particulate. The blend, after removal of solvent, if any, is then molded into a shape, for example a film, or extruded into a fiber, said shaping being performed at a temperature within, or above, the plastic range of the binder. Most conveniently, the compositions, after shaping but before densification, are handled at temperatures within the plastic range of the binder.

The most preferred binder of this invention, succinonitrile, has melting points at -40°C and at +54°C. In the intervening temperature range, succinonitrile looks and acts like a soft plastic, undergoing plastic deformation under pressure to give clear flexible films. A blend containing 80 weight percent of alumina and 20 weight percent of succinonitrile can be processed into shaped articles at temperatures from somewhat below room temperature to, say, 100°C or higher. The preferred binder, trioxane, melts at 64°C but has plastic properties at room temperature. A composition containing about 20 weight percent or more of trioxane can be shaped at temperatures from room temperature to 100°C or higher.

The compositions and processes of this invention are useful to make ceramic-containing laminates. For instance, an electronically useful substrate such as alumina, zirconia or magnesia can be coated with a composition of this invention. Upon firing, the ceramic will adhere to the substrate to form a two-layer laminate desirably free of contaminant residue. Multi-layer laminates can be formed by stacking ceramic particulate/binder films of the same or different composition, or by applying ceramic particulate/binder films to laminates before firing. Structures of widely varying configuration can be made consistent only with the need to provide exit capability for the distillable binder. Such laminates comprising one or more superconducting layers can be employed as bases for connecting electronic components with the objective of reducing electrical losses in the interconnections when said layers are placed in the superconducting state by cooling below the superconducting transition temperature.

In the following illustrative Examples, parts and percentages are by weight and temperatures are in degrees Celsius unless otherwise specified.

### EXAMPLE 1

Methylene chloride (150 mL), succinonitrile (20 g), Alcoa A-16 alumina powder (80 g), methanol (20 mL) and acetic acid (0.4 mL) were mixed in a food blendor. Solvent was removed by evaporation while slowly mixing, giving a gray plastic residue. A plug (2.9 cm dia x 0.92 cm length) and thin sheet were pressed at room temperature and slowly heated to 1500° during which time the succinonitrile was distilled. The thin sheet provided a hard, strong, crack-free ceramic that gave a strong metallic ring when tapped. The larger plug held together but contained some cracks which were believed due to too rapid distillation of the succinonitrile from thick sections.

### EXAMPLE 2

Alcoa A-16 alumina (160 g), succinonitrile (40 g) and acetic acid (1 mL) were blended on an ink mill at 120°. The blend was easily molded at 100° and 300 psi (2070 kPa), giving very flexible molded pieces.

### EXAMPLE 3

Substitution of trioxane for the succinonitrile employed in Example 1 would provide similar shaped articles when worked up according to the procedure described in that Example.

### EXAMPLE 4

Substitution of trioxane for the succinonitrile employed in Example 2 would provide a composition of similar moldability when worked up according to the procedure described in that Example.

### EXAMPLE 5

Iron powder containing 2 percent nickel (180 g) and succinonitrile (20 g) were blended on a rubber mill at 300°. Part of the succinonitrile was thought to have evaporated. The blend was pressed at room temperature to a flexible film.

### EXAMPLE 6

Three g of YBa₂Cu₃O₇ superconducting oxide particulate and 1 g of succinonitrile were placed in a glass vial. The mixture was stirred with a spatula while being warmed in a stream of hot air. The resulting dispersion was quickly poured on a piece of aluminum foil to form a thick pliable film. Half of this film was sandwiched between sheets of aluminium foil and pressed in a Carver laboratory press at room temperature with a load of about 12000 pounds. The resulting black pliable film was about 25 to 40 mils thick.

Strips cut from this film was laid on a thin piece of ZrO₂ electronic substrate and on a piece of single crystal MgO. The combinations were placed in a horizontal position in an oven with an air atmosphere. The temperature was raised from room temperature to 160° at 1 degree per minute, held at 160° for 180 min., raised from 160° to 910° at 2 degrees per minute, held at 910° for 1 min, raised from 910° to 915° at 2 degrees per min, and held at 915° for 60 minutes. The oven was then allowed to cool to 650° at 5 degrees per min, held at 650° for 60 min then cooled from 650° to 50° at 2 deg per min. The resulting black adherent coatings were tested for conductivity by a four probe technique. The film laminates both showed transitions to superconductivity at temperatures above that of liquid nitrogen.

### EXAMPLE 7

The composition of Example 6 can be made employing succinonitrile supported on zirconium oxide. Powdered supported binder and superconducting oxide are milled together in a rubber mill at about 100° and the composite pressed into a film as described in that Example.

### Example 8

Compositions similar to those described in Examples 6 and 7 can be made from powdered precursors of the superconducting oxide employed in those Examples. A suitable powdered precursor can be prepared, for example, as follows: aqueous solutions of yttrium acetate and cupric acetate at about 75° are mixed together, and then barium hydroxide (Ba(OH)₂·8H₂O) is added slowly thereto, with stirring, the amounts being such that yttrium, barium and copper are present in an atomic ratio of about 1:2:3, respectively. The resulting suspension is stirred at 75° until a paste is obtained. The paste is heated until dry, then further dried in a vacuum oven at about 170° for 1 h, and ground to a fine powder. Likewise, trioxane can be employed in place of, or in admixture with, the succinonitrile of Examples 5, 6 and 7.

## Claims

1. A composition comprising particulates of one or more ceramic materials, precursors of one or more ceramic materials, or mixtures thereof, and at least 10% by weight of a distillable binder wherein said distillable binder
(a) is a nonpolymeric organic compound, or a mixture of such compounds, having plastic crystalline properties and at least one melting point in a temperature range of about -40°C to about 300°C; and
(b) undergoes distillation or sublimation and is recovered chemically unchanged under ceramic composition densification conditions; said composition capable of being formed into a shaped article.

2. A composition according to claim 1 wherein the distillable binder is a plastic crystalline compound.

3. A composition according to claim 2 wherein the binder is succinonitrile or trioxane.

4. A composition according to any one of claims 1, 2, and 3 wherein the ceramic comprises one or both of aluminium oxide and aluminium nitride.

5. A composition according to any one of claims 1, 2 and 3 wherein the ceramic comprises a superconductor.

6. A composition according to claim 5 wherein the superconductor comprises at least one compound of yttrium, barium and copper in the atomic weight ratio of about 1:2:3, respectively.

7. A composition according to any one of claims 1 to 6 wherein the distillable binder has plastic properties in a temperature range of about 15°C to 200°C.

8. A composition according to any one of claims 1 to 7 in the form of a shaped article.

9. A process for the preparation and densification of a ceramic shaped article comprising:
(i) admixing particulates of one or more ceramic materials, precursors of one or more ceramic materials or mixtures thereof, and at least 10 weight percent of a distillable binder wherein said distillable binder:
(a) is a nonpolymeric organic compound or mixture of such compounds having plastic crystalline properties and at least one melting point in the temperature range of from about-40°C to about 300°C; and
(b) undergoes distillation or sublimation and is recoverable chemically unchanged during ceramic composition densification conditions;
(ii) forming said admixture into the desired shape;
(iii) removing said distillable binder by distillation, sublimation, or evaporation, and sintering the admixed ceramic materials; and
(iv) recovering said distillable binder chemically unchanged.

## Patentansprüche

1. Zusammensetzung, umfassend feine Teilchen aus einem oder mehreren keramischen Materialien, Vorstufen eines oder mehrerer keramischer Materialien oder deren Gemische und wenigstens 10 Gew.-% eines destillierbaren Bindemittels, worin das destillierbare Bindemittel
(a) eine nicht-polymere organische Verbindung oder eine Mischung aus solchen Verbindungen mit plastischen kristallinen Eigenschaften und wenigstens einem Schmelzpunkt in einem Temperatur-Bereich von etwa -40 °C bis etwa 300 °C ist; und
(b) unter den Bedingungen des Verdichtens einer keramischen Zusammensetzung eine Destillation oder Sublimation erleidet und chemisch unverändert zurückgewonnen wird;
wobei die Zusammensetzung befähigt ist, sich zu einem geformten Gegenstand formen zu lassen.

2. Zusammensetzung nach Anspruch 1, worin das destillierbare Bindemittel eine plastische kristalline Verbindung ist.

3. Zusammensetzung nach Anspruch 2, worin das Bindemittel Succinonitril oder Trioxan ist.

4. Zusammensetzung nach irgendeinem der Ansprüche 1, 2 und 3, worin die Keramik einen oder beide der Stoffe Aluminiumoxid und Aluminiumnitrid umfaßt.

5. Zusammensetzung nach irgendeinem der Ansprüche 1, 2 und 3, worin die Keramik einen Supraleiter umfaßt.

6. Zusammensetzung nach Anspruch 5, worin der Supraleiter wenigstens eine Verbindung aus Yttrium, Barium und Kupfer im Atomgewichts-Verhältnis von etwa 1 : 2 : 3 umfaßt.

7. Zusammensetzung nach irgendeinem der Ansprüche 1 bis 6, worin das destillierbare Bindemittel in einem Temperatur-Bereich von etwa 15 °C bis 200 °C plastische Eigenschaften hat.

8. Zusammensetzung nach irgendeinem der Ansprüche 1 bis 7 in Form eines geformten Gegenstandes.

9. Verfahren zur Herstellung und Verdichtung eines keramischen geformten Gegenstandes, umfassend
(i) das Vermischen feiner Teilchen aus einem oder mehreren keramischen Materialien, Vorstufen eines oder mehrerer keramischer Materialien oder deren Gemische und wenigstens 10 Gew.-% eines destillierbaren Bindemittels, worin das destillierbare Bindemittel
(a) eine nicht-polymere organische Verbindung oder eine Mischung aus solchen Verbindungen mit plastischen kristallinen Eigenschaften und wenigstens einem Schmelzpunkt in einem Temperatur-Bereich von etwa -40 °C bis etwa 300 °C ist; und
(b) unter den Bedingungen des Verdichtens einer keramischen Zusammensetzung eine Destillation oder Sublimation erleidet und chemisch unverändert zurückgewonnen wird;
(ii) das Formen der genannten Mischung zu der gewünschten Form,
(iii) das Entfernen des destillierbaren Bindemittels durch Destillation, Sublimation oder Verdampfung und das Sintern der vermischten keramischen Materialien und
(iv) das Rückgewinnen des chemisch unveränderten genannten destillierbaren Bindemittels.

## Revendications

1. Une composition comprenant des particules d'une ou plusieurs matières céramiques, de précurseurs d'une ou plusieurs matières céramiques, ou de leurs mélanges, et au moins 10 % en poids d'un liant distillable, dans laquelle ledit liant distillable
(a) est un composé organique non polymère, ou un mélange de tels composés, ayant des propriétés cristallines plastiques et au moins un point de fusion dans un intervalle de température d'environ -40°C à environ 300°C ; et
(b) subit une distillation ou une sublimation et est récupéré en un état chimiquement inchangé dans des conditions de densification de composition céramique ; ladite composition pouvant être transformée en un article façonné.

2. Une composition selon la revendication 1, dans laquelle le liant distillable est un composé cristallin plastique.

3. Une composition selon la revendication 2, dans laquelle le liant est le succinonitrile ou le trioxanne.

4. Une composition selon l'une quelconque des revendications 1, 2 et 3, dans laquelle la matière céramique comprend l'un ou chacun de l'oxyde d'aluminium et du nitrure d'aluminium.

5. Une composition selon l'une quelconque des revendications 1, 2 et 3, dans laquelle la matière céramique comprend un supraconducteur.

6. Une composition selon la revendication 5, dans laquelle le supraconducteur comprend au moins un composé d'yttrium, de baryum et de cuivre en un rapport pondéral atomique d'environ 1:2:3, respectivement.

7. Une composition selon l'une quelconque des revendications 1 à 6, dans laquelle le liant distillable possède des propriétés plastiques dans un intervalle de température d'environ 15°C à 200°C.

8. Une composition selon l'une quelconque des revendications 1 à 7 sous la forme d'un article façonné.

9. Un procédé pour la préparation et la densification d'un article céramique façonné, consistant à :
(i) mélanger des particules d'une ou plusieurs matières céramiques, de précurseurs d'une ou plusieurs matières céramiques, ou de leurs mélanges, et au moins 10 pour cent en poids d'un liant distillable, où ledit liant distillable :
(a) est un composé organique non polymère ou un mélange de tels composés ayant des propriétés cristallines plastiques et au moins un point de fusion dans l'intervalle de température d'environ -40°C à environ 300°C ; et
(b) subit une distillation ou une sublimation et peut être récupéré en un état chimiquement inchangé dans des conditions de densification de composition céramique ;
(ii) façonner ledit mélange à la forme souhaitée ;
(iii) éliminer ledit liant distillable par distillation, sublimation ou évaporation, et fritter les matières céramiques mélangées ; et
(iv) récupérer ledit liant distillable chimiquement inchangé.
